# NEUE EUROPÄISCHE PATENTSCHRIFT

(11) **EP 0 914 644 B2**
(45) Veröffentlichungstag und Bekanntmachung des Hinweises auf die Entscheidung über den Einspruch: **21.01.2009**
(45) Hinweis auf die Patenterteilung: 21.11.2001
(21) Anmeldenummer: 97931695.7
(22) Anmeldetag: 01.07.1997
(51) Int. Cl.: G09B 29/10, G01C 21/20

(54) **VORRICHTUNG ZUM EMPFANG UND ZUR ANZEIGE KARTOGRAPHISCHER DATEN**
DEVICE FOR RECEIVING AND FOR DISPLAYING CARTOGRAPHIC DATA
DISPOSITIF DE RECEPTION ET D'AFFICHAGE DE DONNEES CARTOGRAPHIQUES

(30) Priorität: 26.07.1996 DE 19630317
(43) Veröffentlichungstag der Anmeldung: 12.05.1999
(73) Patentinhaber: SIEMENS AKTIENGESELLSCHAFT, 80333 München (DE)
(72) Erfinder: SCHÖNBAUER, Helmut, D-80339 München (DE)
(86) Internationale Anmeldenummer: PCT/DE1997/001377
(87) Internationale Veröffentlichungsnummer: WO 1998/005019

(56) Entgegenhaltungen:
- EP-A- 0 379 198
- EP-A- 0 528 090
- EP-A2- 0 539 143
- GB-A- 2 287 535
- GB-A- 2 298 539
- PATENT ABSTRACTS OF JAPAN vol. 017, no. 057 (E-1315), 4.Februar 1993 & JP 04 266228 A (SONY CORP), 22.September 1992,
- PATENT ABSTRACTS OF JAPAN vol. 016, no. 435 (E-1263), 10.September 1992 & JP 04 152724 A (HITACHI LTD), 26.Mai 1992,
- PATENT ABSTRACTS OF JAPAN vol. 013, no. 397 (P-928), 5.September 1989 & JP 01 142899 A (NEC CORP), 5.Juni 1989,

## Beschreibung

In vielen Bereichen des Alltags, wie z.B. in der automobilen Verkehrsleittechnik, ist die bildhafte Darstellung kartographischer Daten mit Mitteln der digitalen Informationsverarbeitung bereits recht verbreitet. Typische Systeme dieser Art sind mit einem Massenspeichermedium ausgerüstet, auf dem die kartographischen Daten gespeichert sind. Ferner weisen diese Systeme eine graphische Anzeigevorrichtung auf, mit deren Hilfe die kartographischen Daten in bildhafter Form dargestellt werden können. Dazu muß der Anwender i.a. eine geeignete Karte, die auf dem Massenspeichermedium, i.a. auf einer CD-ROM, gespeichert ist, auswählen, welche daraufhin auf der Anzeigevorrichtung dargestellt wird.

Der praktische Anwendungsbereich derartiger Systeme ist erfahrungsgemäß auf automobile und ähnliche Umgebungen beschränkt, weil der Transport einer Massenspeichereinrichtung ausreichender Kapazität gewöhnlich von einem Fußgänger als unzumutbar empfunden wird. Für einen Fußgänger, der z.B. in einer ihm fremden Umgebung (z.B. in einer ihm unbekannten Großstadt) Orientierung sucht, sind derartige Systeme praktisch deshalb nicht geeignet. Ein solcher Anwender verlangt nach einem einfach zu handhabenden System, daß ihm quasi "auf Knopfdruck" die von ihm gerade benötigten kartographischen Informationen beschafft und so darstellt, wie er es im Augenblick benötigt.

Der Erfindung liegt die Aufgabe zugrunde, eine für einen solchen Anwender und auch für andere Anwendungsfälle geeignete, sehr einfach zu handhabende Vorrichtung anzugeben.

In den Publikationen
EP0379198, GB2298539, GB2287535, EP0528090, JP4266228, JP4152724, JP1142899
sowie in den Veröffentlichungen
- PATENT ABSTRACTS OF JAPAN vol. 017, no. 057 (E-1315), 4.Februar 1993 & JP 04 266228 A (SONY CORP), 22.September, 1992,
- PATENT ABSTRACTS OF JAPAN vol. 016, no. 435 (E-1263), 10.September 1992 & JP 04 152724 A (HITACHI LTD), 26.Mai 1992,
- PATENT ABSTRACTS OF JAPAN vol. 013, no. 397 (P-928), 5.September 1989 & JP 01 142899 A (NEC CORP), 5.Juni 1989
werden verschiedene Verfahren bzw. Systeme beschrieben, die in diesem Zusammenhang relevant sind, jedoch noch nicht die erstrebte Lösung der Aufgabe angeben.

Diese Aufgabe wird durch eine Vorrichtung mit Mermalen nach Anspruch 1 gelöst. Diese Vorrichtung ist in der Lage, ihre eigene geographische Position durch den drahtlosen Empfang entsprechender Signale zu bestimmen und eine Kommunikationsverbindung zu einem Informationssystem aufzubauen, in dem kartographische Position der Vorrichtung relevant sind. Diese Daten werden geladen und in bildhafter Form zur Anzeige gebracht.

Unterwegs in der Öffentlichkeit, sowohl beruflich als auch privat, stellen sich oft zwei wichtige Fragen: Wo befinde ich mich? Wo befindet sich mein Ziel und wie ist es erreichbar? Z.B. für Werbezwecke ist es oft wünschenswert, einem potentiellen Kunden den Weg in das eigene Geschäft, Lokal, Kino, etc. zu erleichtern. Durch die erfindungsgemäße Vorrichtung, die dem Anwender die Ermittlung des eigenen Standortes zusammen mit dem Laden und der Anzeige von standort-, ziel- und bzw. oder anwendungsspezifischen Karten und des darauf markierten Ziels in einem mobilen Gerät ermöglicht, wird diese Aufgabe elegant gelöst.

Hierdurch wird der Anwender weitgehend von unbequemen Suchaufgaben und insbesondere von der Auswahl einer für seinen momentanen geographischen Standort relevanten Karte entlastet. Es wird statt dessen ein Informationssystem, z.B. ein Online-Dienst angewählt, auf welchem die momentan benötigten Informationen gespeichert der vorliegenden Erfindung ist ein spezielles Bedienelement vorgesehen, dessen Betätigung die Bestimmung der geographischen Position der Vorrichtung und die automatische bildhafte Anzeige entsprechender kartographischer Daten bewirkt. Hierdurch wird die Handhabung der erfindungsgemäßen Vorrichtung so weitgehend vereinfacht, daß auch Anwender mit extrem geringer technischer Erfahrung jederzeit in der Lage sind, die momentan benötigten kartographischen Informationen zu erhalten, z.B. den augenblicklich relevanten Ausschnitt eines Stadtplans oder ähnliches.

Eine weitere vorteilhafte Ausführungsform der vorliegenden Erfindung sieht Mittel zur Anzeige einer Liste mehrerer kartographischer Dateien in symbolischer Form vor, aus welcher der Anwender der Vorrichtung eine für seine momentane Fragestellung besonders geeignete Karte auswählen kann. So könnte beispielsweise ein Autofahrer auf der Suche nach dem Weg durch eine Innenstadt zu einer Autobahnanschlußstelle eine andere Karte benötigen als ein umherwandernder Tourist, welcher sich für Informationen über Sehenswürdigkeiten in seiner Nähe und deren genaue Lage interessiert, oder beispielsweise ein medizinisch hilfebedürftiger, ortsunkundiger Besucher einer fremden Stadt, der rasch ein Medikament benötigt und deshalb über die Lage von Apotheken, Krankenhäusern oder ähnlichen Einrichtungen in seiner Nähe, die Wege dorthin und gegebenenfalls über die verfügbaren geeigneten Verkehrsmittel informiert werden möchte.

In diesem Zusammenhang ist eine weitere vorteilhafte Ausführungsform der vorliegenden Erfindung von besonderem Interesse, welche Mittel zur Anzeige der geographischen Position der Vorrichtung im angezeigten Kartenbild vorsieht. Hierdurch wird dem Anwender das Auffinden eines geeigneten Weges von seiner momentanen Position zu einem von ihm ausgewählten Ziel besonders erleichtert. Ein Anwender auf der Suche nach einem Restaurant in einer fremden Stadt wählt z.B. die zu seiner geographischen Position passende Karte einer Pizza-Kette, auf der die Position des Benutzers (d.h. der Vorrichtung) und die Lage der nächstliegenden Pizza-Lokale dieser Kette eingetragen und gegebenenfalls besonders markiert sind. Ein anderer Benutzer wählt z.B. eine Wanderkarte (von eventuell mehreren unterschiedlichen Angeboten unterschiedlicher Anbieter oder in verschiedenen Maßstäben), in der die Position des Benutzers eingetragen ist.

In manchen Fällen könnte das Auffinden von Objekten in einer bestimmten Umgebung auch dann noch Schwierigkeiten bereiten, wenn das gesuchte Objekt zwar schon im angezeigten Bildbereich der Karte enthalten ist, der Anwender es aber aufgrund der Komplexität der angezeigten Informationen oder wegen mangelner Kenntnisse über die geeignete Interpretation der Karte nicht oder nur schwer erkennt. Hier ist eine weitere vorteilhafte Ausführungsform der vorliegenden Erfindung besonders hilfreich, welche Mittel zur Eingabe von Zeichen oder Zeichenfolgen durch den Benutzer und Mittel zur Suche von Objekten oder Bildbereichen in kartographischen Dateien, die mit einem eingegebenen Zeichen oder einer eingegebenen Zeichenfolge verknüpft sind, sowie Mittel zur Anzeige der geographischen Position solcher Objekte oder Bildbereiche vorsieht.

Zur Erläuterung von Ausführungsbeispielen der Erfindung dienen die nachstehend aufgelisteten Figuren:

FIG 1 zeigt in schematischer Weise die erfindungsgemäße Vorrichtung und Ihre Wirkungsweise im Zusammenspiel mit externen Einrichtungen.

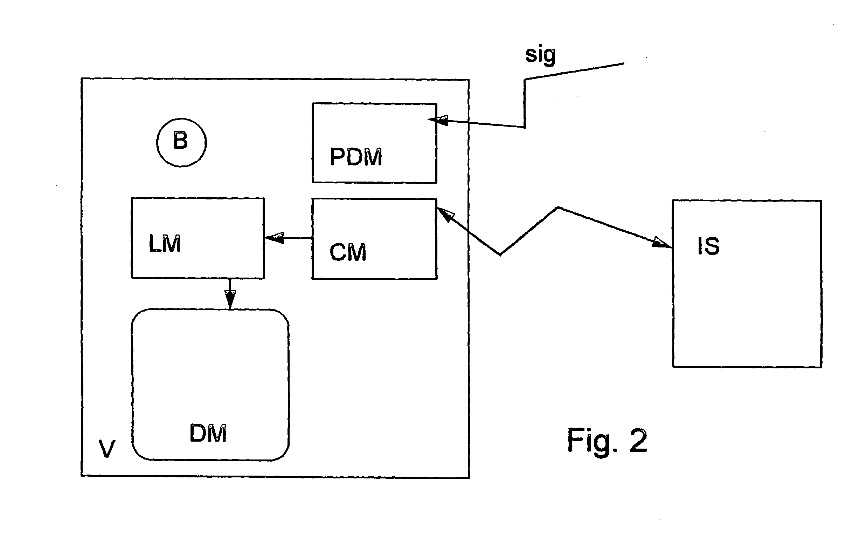

FIG 2 zeigt in schematischer Weise eine vorteilhafte Ausführungsform der erfindungsgemäßen Vorrichtung, bei der ein spezielles Bedienelement (B) vorgesehen ist.

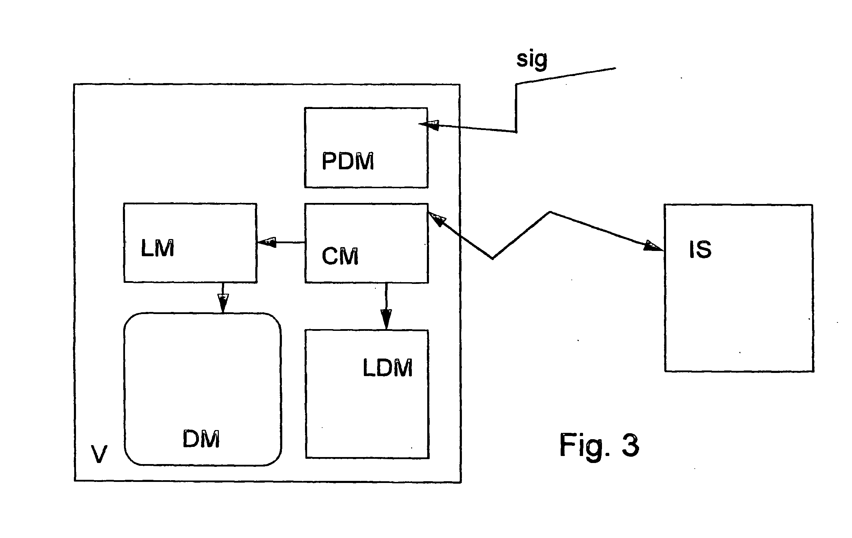

FIG 3 zeigt in schematischer Weise eine vorteilhafte Ausführungsform der erfindungsgemäßen Vorrichtung, bei der Mittel (LDM) zur Anzeige einer Liste vorgesehen sind.

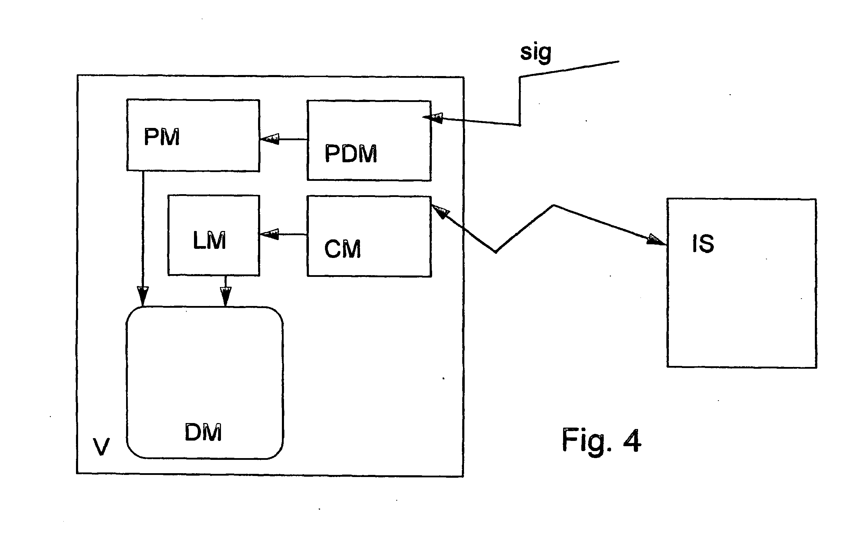

FIG 4 zeigt in schematischer Weise eine vorteilhafte Ausführungsform der erfindungsgemäßen Vorrichtung, bei der Mittel (PM) zur Anzeige der geographischen Position der Vorrichtung vorgesehen sind.

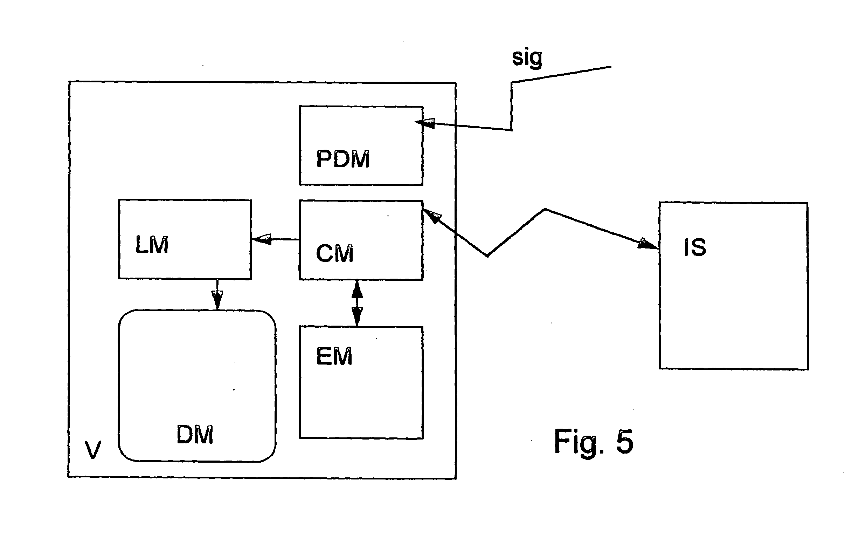

FIG 5 zeigt in schematischer Weise eine vorteilhafte Ausführungsform der erfindungsgemäßen Vorrichtung, bei der Mittel (EM) zur Eingabe von Zeichen vorgesehen sind.

Die Erfindung wird im folgenden anhand vorteilhafter Ausführungsbeispiele und mit Hilfe der Figuren näher beschrieben.

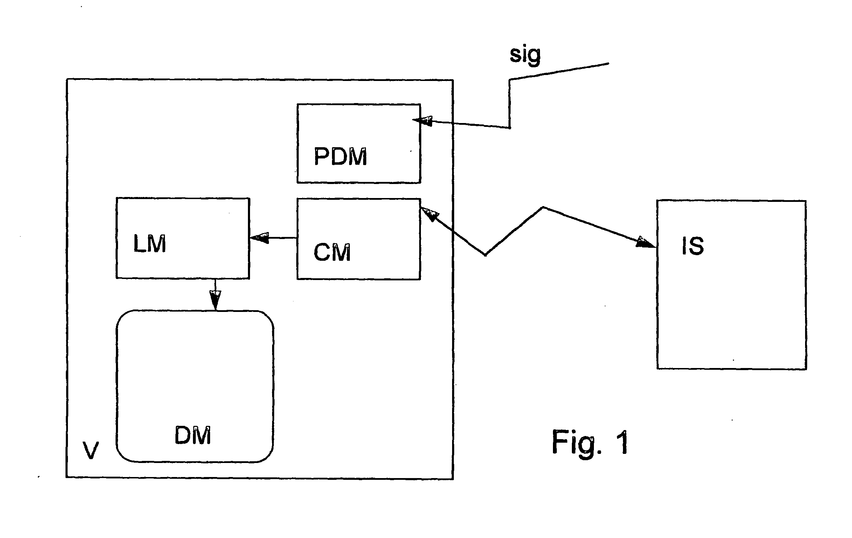

Der prinzipielle Aufbau der erfindungsgemäßen Vorrichtung und ihr Zusammenspiel mit einem funkbasierten Navigationssystem wie z.B. dem Global Positioning System (GPS) und einem Informationssystem, welches über Funk erreicht werden kann, wird in Figur 1 gezeigt. Die Vorrichtung ist mit Mitteln zur Bestimmung der graphischen Position durch den drahtlosen Empfang entsprechender Signale ausgerüstet. Solche Mittel sind von handelsüblichen Geräten zur satellitengestützten Navigation mit Hilfe des GPS in ausreichender Zahl bekannt. Natürlich können auch andere Navigationssysteme als das GPS verwendet werden. Prinzipiell ist zur Realisierung der Erfindung jedes Signal geeignet, welches im geographischen Anwendungsgebiet der Erfindung von einer mobilen Vorrichtung empfangen werden kann, und welches die Ermittlung der geographischen Position der Vorrichtung erlaubt.

Die Vorrichtung verfügt ferner über Mittel zur Herstellung einer drahtlosen Kommunikationsverbindung zu einem Informationssystem, in dem kartographische Daten gespeichert sind, die im Hinblick auf die geographische Position der Vorrichtung relevant sind. Solche Mittel sind grundsätzlich von Mobiltelefonen in Verbindung mit handelsüblichen Adaptern zum Anschluß solcher Mobiltelefone an mobile Datenverarbeitungssysteme bekannt. Bei diesen handelsüblichen Systemen wird z.B. ein Mobiltelefon mit Hilfe eines speziellen Adapters, der im wesentlichen eine PCMCIA-Karte beinhaltet, über ein PCMCIA-Slot in der mobilen Datenverarbeitungseinrichtung an diese angeschlossen. Im Fall der erfindungsgemäßen Vorrichtung sind wesentliche Komponenten des Mobiltelefons und der mobilen Datenverarbeitungseinrichtung vorzugsweise in die erfindungsgemäße Vorrichtung integriert.

Im Unterschied zu bekannten Vorrichtungen dieser Art, ist die erfindungsgemäße Vorrichtung nun in der Lage, ganz gezielt eine Kommunikationsverbindung zu einem solchen Informationssystem aufzubauen, in welchem kartographische Daten gespeichert sind, die im Hinblick auf die geographische Position der Vorrichtung relevant sind. Zur Realisierung dieser Eigenschaft der Vorrichtung sind mehrere unterschiedliche, aber in ihrer Auswirkung gleichwertige Wege möglich.

Ein Weg besteht darin, in der Vorrichtung selbst Informationen über die Verfügbarkeit geographischer Daten auf bestimmten Informationssystemen so abzuspeichern, daß bei Bereitstellung der geographischen Position das geeignete Informationssystem oder die geeigneten Informationssysteme allein durch Auswertung dieser im Gerät selbst abgespeicherten Informationen stattfinden kann. Solche Informationen könnten z.B. in Form einer elektronisch gespeicherten Tabelle in der Vorrichtung gespeichert sein, in welcher einzelnen geographischen Gebieten eine oder mehrere kartographische Dateien einschließlich der Speicheradressen auf den jeweiligen Informationssystemen zugeordnet sind. Dabei könnten die geographischen Bereiche z.B. durch Intervalle von Längen- bzw. Breitengraden spezifiziert sein. Dem Fachmann fallen anhand der hier vorgenommenen exemplarischen Beschreibungen eine Reihe weiterer gleichwertiger Möglichkeiten zur Speicherung derartiger Informationen in der Vorrichtung ein. Mit Hilfe dieser in der Vorrichtung gespeicherten Informationen ist es einer auf einem Prozessor der Vorrichtung laufenden Software möglich, anhand der ermittelten geographischen Position diejenigen Informationssysteme oder dasjenige Informationssystem zu ermitteln, in welchem relevante kartographische Daten gespeichert sind. Mit Hilfe der in der Vorrichtung integrierten Kommunikationsmittel kann dann eine Verbindung zu einem dieser Informationssysteme oder zu mehreren solcher Informationssysteme aufgebaut werden.

Ein grundsätzlich anderer Weg besteht darin, daß die erfindungsgemäße Vorrichtung zunächst eine Kommunikationsverbindung zu einem Informationssystem aufbaut, auf welchem Informationen darüber gespeichert sind, welche kartographischen Daten sich auf welchen weiteren Informationssystemen befinden. Derartige erste Informationssysteme würden also wie Datenbanken arbeiten, von denen die erfindungsgemäße Vorrichtung die jeweils benötigten Informationen über die Speicherung von kartographischen Daten und den ihnen zugeordneten Informationssystemen abrufen könnte. Danach würde die erfindungsgemäße Vorrichtung eine Kommunikationsverbindung zu einem zweiten Informationssystem aufbauen, welches die Vorrichtung mit Hilfe der auf dem ersten Informationssystem gespeicherten Informationen ermittelt hätte. Diese Informationen würden im Prinzip den gleichen Aufbau haben wie die auf der Vorrichtung beim ersten Weg gespeicherten Informationen. Das von der Vorrichtung angerufene erste Kommunikationssystem könnte dabei je nach geographischer Region, in der sich die Vorrichtung gerade befindet unterschiedlich sein. Beispielsweise könnte in Nordamerika ein anderes Kommunikationssystem als kartographische Datenbank dienen, als etwa in Asien oder Europa. Es wäre aber auch denkbar, daß ein weltweit verbreitetes Informationssystem als universelle Anlaufstelle für die erfindungsgemäßen Vorrichtungen arbeiten könnte.

Ein dritter Weg zur Realisierung der Erfindung bestünde darin, daß in der erfindungsgemäßen Vorrichtung zwar die Zuordnungen zwischen geographischen Regionen und Kommunikationssystemen gespeichert würden, daß diese Zuordnung aber gelegentlich oder bei Bedarf auf dem zweiten Weg aktualisiert würden. Der dritte Weg kombiniert also die Vorgehensweisen des ersten und des zweiten beschriebenen Weges.

In jedem Fall können die geschilderten Kommunikationsverbindungen mit einem oder mehreren Informationssystemen für den Anwender unmerklich und völlig transparent so aufgebaut werden, daß schließlich die benötigten kartographischen Daten von einem solchen Informationssystem geladen werden, auf dem sie sich tatsächlich befinden. Da der Aufbau von drahtlosen Kommunikationsverbindungen zu einem oder mehreren Informationssystemen mit den heute verfügbaren technischen Mitteln so schnell durchgeführt werden kann, daß die hierfür benötigte Zeit für die betrachtete Anwendung vernachlässigbar klein ist, spielt es letztlich für den Anwender meist keine Rolle, welcher Weg zur Ermittlung der benötigten Information gewählt wird. Es wäre schließlich auch denkbar, daß eine erfindungsgemäße Vorrichtung fallweise unterschiedliche der hier beschriebenen Wege einschlägt, um zu der benötigten kartographischen Information zu gelangen, beispielsweise in Abhängigkeit vom momentanen geographischen Standort.

Bei der erfindungsgemäßen Vorrichtung sind ferner Mittel zum Laden solcher kartographischen Daten von einem solchen Informationssystem über eine solche drahtlose Kommunikationsverbindung vorgesehen. Diese Mittel werden am einfachsten durch eine entsprechende Software realisiert, welche in an sich bekannter Weise einen Datenübertragungsprozess von dem Informationssystem in einen Speicher der erfindungsgemäßen Vorrichtung über die drahtlose Kommunikationsverbindung anstößt.

Schließlich verfügt die erfindungsgemäße Vorrichtung über Mittel zur Anzeige solcher geladenen Daten in bildhafter Form. Hier kommt die gesamte Vielfalt der bekannten Anzeigevorrichtungen für digitale Bilder potentiell zum Einsatz. Aus der Computertechnik sind zahlreiche unterschiedliche derartige Anzeigevorrichtungen bekannt, so daß zur Beschreibung der vorliegenden Erfindung nicht näher auf die Realisierung dieses Merkmals eingegangen werden muß.

Eine Möglichkeit zur Durchführung der vorliegenden Erfindung besteht in der Verwendung eines handelsüblichen, mobilen Computers (Notebook) in Verbindung mit daran angeschlossenem Empfänger zum Empfang von Signalen für die Bestimmung der geographischen Position. GPS-Empfänger sind für den Einsatz in Verbindung mit handelsüblichen Computersystemen in großer Zahl verfügbar. An diesen mobilen Computer könnte über herkömmliche Verbindungseinrichtungen z.B. ein Mobiltelefon angeschlossen sein, welches zur Datenübertragung verwendet wird. Mit Hilfe dieser Datenübertragungseinrichtung könnte eine Kommunikationsverbindung zu einem Informationssystem wie z.B. Compuserve aufgebaut werden. Auf diesem Informationssystem könnte ein bestimmtes Unterverzeichnis (in Compuserve z.B. als Forum bezeichnet) existieren, in welchem eine Datei abgelegt ist, in welcher sich Informationen darüber befinden, welche kartographischen Daten zu welchen geographischen Regionen sich auf welchen Informationssystemen oder in welchen anderen Unterverzeichnissen desselben Informationssystems befinden. Bei dieser Realisierungsvariante der Erfindung, würde auf dem mobilen Datenverarbeitungssystem eine Software laufen, welche die hier gespeicherte Datei öffnet, und daraus ermittelt, wo die benötigten kartographischen Daten gespeichert sind. Je nachdem, wo die benötigten kartographischen Daten, welche für die momentane geographische Position der Vorrichtung relevant sind, gespeichert sind, würde die auf dem mobilen Datenverarbeitungssystem laufende Software nun eine Verbindung zu einem weiteren Informationssystem aufbauen, oder innerhalb desselben Informationssystems in ein Verzeichnis wechseln, in welchem die benötigten kartographischen Daten gespeichert sind. Daraufhin würde diese Software einen Datenübertragungsprozess (Down Load) anstoßen, bei welchem die gewünschten kartographischen Daten von dem Informationssystem, auf welchem sie gespeichert sind, in die erfindungsgemäße Vorrichtung, in diesem Fall in das mobile Datenverarbeitungssystem, bzw. in dessen Speicher, übertragen werden. Hierzu könnte eine proprietäre Software des angewählten Informationssystems zum Einsatz kommen oder aber z.B. eine handelsübliche Terminalsoftware, welche den Datenübertragungsprozess nach üblichen Datenübertragungsprotokollen vornimmt. Die übertragenen Daten würden bei dieser Variante im Arbeitsspeicher des mobilen Datenverarbeitungssystems oder auf dessen Massenspeichermedium (Festplatte) gespeichert werden und danach auf der graphischen Anzeigevorrichtung des mobilen Datenverarbeitungssystems in bildhafter Form zur Anzeige gebracht werden.

Bei einer bevorzugten Ausführungsform der vorliegenden Erfindung ist ein Bedienelement vorgesehen, dessen Betätigung die Bestimmung der geographischen Position der Vorrichtung und die automatische bildhafte Anzeige von kartographischen Daten, die im Hinblick auf die geographische Position der Vorrichtung relevant sind, zur Folge hat. Hierbei kann es sich um eine besondere Taste im Bedienfeld der Vorrichtung handeln, oder aber um eine speziell programmierte Funktionstaste, die z.B. im Auslieferungszustand der Vorrichtung mit dieser Funktion belegt ist. Die Betätigung dieses Bedienelementes bewirkt die Ermittlung der geographischen Position der Vorrichtung und die anschließende automatische Anzeige relevanter Kärten oder eines relevanten Kartenausschnittes auf dem graphischen Display der Vorrichtung. Sind relevante kartographische Daten noch im Speicher der Vorrichtung gespeichert, genügt möglicherweise eine Ausschnittsänderung bei der Anzeige der Daten. In anderen Fällen, in denen die geographische Position sich gegenüber früheren Positionen stark verändert hat, und bzw. oder der Speicher keine relevanten Daten (mehr) enthält, wird ein neues Laden der Daten auf den bereits beschriebenen Wegen notwendig sein.

Bei der erfindungsgemäßen Vorrichtung sind Mittel zur Anzeige einer Liste mehrerer kartographischer Dateien in symbolischer Form und Mittel zur Auswahl einer angezeigten Datei aus dieser Liste durch den Benutzer vorgesehen. Die Erfindung bietet dann besondere Vorteile, wenn zu einer bestimmten Position - auf einem Informationssystem oder auf mehreren Informationssystemen - mehrere relevante kartographische Dateien verfügbar sind. Diese können z.B. von unterschiedlichen Anbietern stammen, und ihr Abruf kann deshalb z.B. mit unterschiedlichen Gebühren verbunden sein. Oder es können Dateien mit thematisch unterschiedlichen Karten vorliegen, unter denen der Benutzer eine seinen momentanen Bedürfnissen entsprechende auswählen möchte. Diese Möglichkeit bietet ihm die Erfindung, bei der - zumindest dann, wenn mehrere relevante Karten zu der momentanen Position vorliegen, die Möglichkeit zur Anzeige einer entsprechenden Liste besteht. Die Liste kann natürlich über dasselbe Display angezeigt werden, das auch für die Anzeige der Karten verwendet wird. Dies kann vorzugsweise in Form eines Auswahlmenüs geschehen, wie sie im Bereich der Personal Computer, Notebooks oder Personal Digital Assistants allgemein üblich sind. Ebenfalls mit den dort üblichen Mitteln, z.B. Touch Screen, Zeigestift, oder mit ähnlichen Eingabemitteln kann der Benutzer aus dieser Liste eine deinen Vorstellungen oder Bedürfnissen entsprechende Karte auswählen, die dann von dem Informationssystem heruntergeladen und in bildhafter Form angezeigt wird.

Die beiden vorstehend beschriebenen Ausführungsbeispiele können mit besonderem Vorteil auch kombiniert eingesetzt werden. Dabei bewirkt dann die Betätigung des Bedienelementes gegebenenfalls zunächst die Anzeige einer Liste und nach Auswahl einer Datei die Anzeige der zu der ausgewählten Datei gehörigen kartographischen Daten als Kartenbild.

Bei einer weiteren bevorzugten Ausführungsform der erfindungsgemäßen Vorrichtung sind Mittel (PM) zur Anzeige der geographischen Position der Vorrichtung im angezeigten Kartenbild vorgesehen. Dies kann in an sich bekannter Weise durch optische Hervorhebung von Objekten in den angezeigten Bildern im Hinblick auf deren Helligkeit oder Farbe, auch z.B. durch ein zeitlich wechselndes Helligkeits- oder Farbmuster (Blinken) oder durch geeignete zusätzliche ikonographische Maßnahmen wie z.B. Pfeile, Kreuze oder ähnliches geschehen.

Bei einer weiteren bevorzugten Ausführungsform der erfindungsgemäßen Vorrichtung sind Mittel (EM) zur Eingabe von Zeichen oder Zeichenfolgen durch den Benutzer und Mittel zur Suche von Objekten oder Bildbereichen in kartographischen Dateien, die mit einem eingegebenen Zeichen oder einer eingegebenen Zeichenfolge verknüpft sind, und Mitteln zur Anzeige der geographischen Position solcher Objekte oder Bildbereiche im angezeigten Kartenbild vorgesehen. Diese Variante der Erfindung soll dem Benutzer die interaktive Anwendung der Karte ermöglichen. Er wird in die Lage versetzt, ein Objekt, das ihm gänzlich unbekannt ist, auch in einer sehr komplexen Karte aufzufinden. Diese besonders vorteilhafte Ausführungsform der Erfindung kann auf mehrere unterschiedliche Weisen realisiert werden.

Zum einen kann zusammen mit den kartographischen Daten eine weitere Datei von dem oder einem anderen Informationssystem heruntergeladen werden, welche eine Zuordnung von Objektnamen oder anderen, einzelnen Objekten oder Objektgruppen in der Karte zugeordneten Worten, Texten oder Zeichenfolgen enthält. Diese Datei kann dann z.B. nach einer vom Benutzer eingegebenen Zeichenfolge durchsucht werden, oder dem Benutzer können alle in der Datei suchbaren Zeichenfolgen (Index) zur Auswahl angeboten werden. Nachdem der Benutzer eine Zeichenfolge ausgewählt oder eingegeben hat, wird das zugeordnete Objekt oder die zugeordnete Objektgruppe in der Karte - z.B. mit den bereits beschriebenen Mitteln - angezeigt. Zur Eingabe kann dem Benutzer dabei eine Tastatur dienen, oder es kann eine Handschrifterkennung zum Einsatz kommen. Weitere Möglichkeiten sind dem Fachmann aus den Bereichen Personal Computer. Note-books, oder Personal Digital Assistants bekannt.

Die Datei mit den Zuordnungen kann aber auch ein integraler Bestandteil der kartographischen Daten sein, so daß eine separate Datei nicht übertragen werden muß. In einer anderen Realisierungsform können die Zuordnungsdaten aber auch auf dem oder einem anderen Informationssystem verbleiben. Dann bleibt die Kommunikationsverbindung zu dem betreffenden Informationssystem für die Dauer der Interaktion (Suche) bestehen. Dem Fachmann erschließen sich anhand der vorliegenden Beschreibung leicht weitere Realisierungsvarianten, die hier aus Gründen der Übersichtlichkeit nicht abschließend behandelt werden können.

Eine besonders vorteilhafte und kostengünstige Realisierung der vorliegenden Erfindung ergibt sich durch Kombination herkömmlicher Geräte für mobile Kommunikation und geographische Positionsbestimmung mit einem tragbaren Datenverarbeitungsgerät (Notebook, Personal Digital Assistant, Personal Intelligent Communicator), auf dem eine Software ablauffähig ist, die die erfindungsgemäßen Merkmale verwirklicht. Als bevorzugtes Informationssystem im Sinne der vorliegenden Erfindung bieten sich Computernetze wie z.B. das Internet, insbesondere in Form des World Wide Web, an. Grundsätzlich ist aber auch jedes andere Online-Informationssystem geeignet.

## Patentansprüche

1. Vorrichtung (V) mit folgenden Merkmalen:
a) Mitteln (PDM) zur Bestimmung der geographischen Position der Vorrichtung an vom Benutzer der Vorrichtung beliebig wählbaren Orten durch den drahtlosen Empfang entsprechender Signale (sig);
b) Mitteln (CM) zur Herstellung einer drahtlosen Kommunikationsverbindung zu einem mit weiteren Informationssystemen in Form eines Computernetzes in Verbindung stehenden Informationssystem (IS), in dem oder in welchen weiteren Informationssystemen kartographische, in bildhafter Form darstellbare Daten in Form kartographischer Dateien, die thematisch unterschiedlichen Karten zu der momentanen geographischen Position der Vorrichtung entsprechen, gespeichert sind, die im Hinblick auf die geographische Position der Vorrichtung relevant sind;
c) Mitteln (LM) zum Laden solcher Daten von einem solchen Informationssystem über eine solche drahtlose Kommunikationsverbindung;
d) Mitteln zur Anzeige (DM) solcher geladenen Daten in bildhafter Form;
e) Mitteln (LDM) zur Anzeige einer Liste mehrerer kartographischer Dateien mit thematisch unterschiedlichen Karten zu der momentanen geographischen Position der Vorrichtung in symbolischer Form und Mitteln zur Auswahl einer angezeigten, durch den Benutzer der Vorrichtung in seiner momentanen Situation benötigten Datei aus dieser Liste durch den Benutzer, so dass diese von ihm gerade benötigten Karten beschafft und dargestellt werden.

## Claims

1. Apparatus (V) having the following features:
a) means (PDM) for determining the geographical position of the apparatus at locations freely selectable by the user of the apparatus through the wireless reception of appropriate signals (sig) ;
b) means (CM) for setting up a wireless communication link to an information system (IS) which is connected to further information systems in the form of a computer network, which information system or which further information systems store(s) cartographical data, which can be presented in pictorial form, in the form of cartographical files which correspond to thematically different maps for the current geographical position of the apparatus, which data are relevant to the geographical position of the apparatus;
c) means (LM) for loading such data from such an information system via such a wireless communication link;
d) means for displaying (DM) such loaded data in pictorial form;
e) means (LDM) for displaying a list containing a plurality of cartographical files with thematically different maps for the current geographical position of the apparatus in symbolic form and means for the selection of a displayed file, which is required by the user of the apparatus in his current situation, from this list by the user, so that these maps which he currently requires are obtained and presented.

## Revendications

1. Dispositif (V) comprenant les caractéristiques suivantes :
a) des moyens (PDM) destinés à déterminer la position géographique du dispositif à des endroits sélectionnables au choix par l'utilisateur du dispositif par la réception sans fil de signaux correspondants (sig) ;
b) des moyens (CM) destinés à établir une liaison de communication sans fil vers un système d'information (IS) se trouvant en liaison avec des systèmes d'information supplémentaires sous forme d'un réseau d'ordinateurs, dans lequel système d'information ou dans lesquels systèmes d'information supplémentaires des données cartographiques représentables sous forme imagée sont mémorisées sous forme de données cartographiques correspondant à des cartes de différents thèmes par rapport à la position géographique momentanée du dispositif, qui sont importantes au regard de la position géographique du dispositif ;
c) des moyens (LM) destinés à télécharger de telles données d'un tel système d'information par l'intermédiaire d'une telle liaison de communication sans fil ;
d) des moyens destinés à afficher (DM) sous forme imagée de telles données téléchargées ;
e) des moyens (LDM) destinés à afficher une liste de plusieurs données cartographiques avec cartes de différents thèmes par rapport à la position géographique momentanée du dispositif, sous forme symbolique, et des moyens destinés à la sélection, par l'utilisateur, des données de cette liste, nécessité par l'utilisateur du dispositif dans sa position momentanée, de sorte que ces cartes, dont il a besoin juste à ce moment-là, sont fournies et représentées.
